# EUROPEAN PATENT SPECIFICATION

(11) **EP 1 788 916 B1**
(45) Date of publication and mention of the grant of the patent: **08.04.2009**
(21) Application number: 05768033.2
(22) Date of filing: 03.08.2005
(51) Int. Cl.: A47J 31/40, A47J 31/52, B65D 79/02

(54) **APPARATUS FOR DISPENSING A FLOWABLE FOODSTUFF**
VORRICHTUNG ZUR AUSGABE EINES FLIESSFÄHIGEN NAHRUNGSMITTELS
APPAREIL DE DISTRIBUTION DE DENRÉES ALIMENTAIRES FLUIDES

(30) Priority: 06.08.2004 GB 0417534
(43) Date of publication of application: 30.05.2007
(73) Proprietor: IMI VISION LIMITED, Alcester, Warwickshire B49 6EU (GB)
(72) Inventor: WALLACE, Mark, Andrew, South Staffordshire DY7 6DG (GB); DAVEY, Stuart, Charles, Warwickshire CV47 1GA (GB); SIMMONS, Phil, Alcester B49 6EF (GB); HUNTER, John, Rogers, MN 55374 (US)
(74) Representative: Wightman, David Alexander
(86) International application number: PCT/GB2005/003043
(87) International publication number: WO 2006/013362

(56) References cited:
- WO-A-01/80174
- WO-A-20/04024615
- DE-A1- 19 911 709
- DE-U1- 29 905 398
- US-A1- 2002 023 935
- US-A1- 2002 134 831

## Description

This invention relates to improvements in or relating to apparatus for dispensing a flowable foodstuff as described in the preamble of claim 1. Such apparatus is mentioned in US 2002/0023935. The invention is particularly concerned with the addition of an ingredient to a dispensed drink, to which the following description is largely directed, but it is to be understood that the invention, including the preferred embodiments thereof described below, is equally applicable to other flowable foodstuffs such as, for example, yoghurt and cream.

Soft drinks systems that produce a drink by mixing a flavour concentrate with a diluent are widely known in the art. Several systems exist in which, at the request of the customer, the machine dispenses a drink having an additional concentrate selected by the customer. These systems allow the user to have greater control over the flavour of their drink. At present, these systems are fairly limited in that they are designed for use with the same concentrated ingredients already being used with the system. Although theoretically any additional flavours could be added, the design of the systems are such that the addition of extra concentrates that are not already a part of the system add considerably to the complexity and the size of the beverage dispenser and system as a whole. In particular, in order to control the temperature of the dispensed product, concentrates are often cooled before being mixed with a diluent, for which purpose an additional refrigeration capability is required.

In the current trend of consumer choice and variety it is highly desirable to have a large flexibility in the additional ingredients that can be added into a beverage, e.g. seasonal flavours, movie promotions etc. Commonly the dispensers are operated and restocked by untrained staff and as such it is considered advantageous to have a system which is as simple as is possible to use and maintain. One problem associated with the current systems is that if the additional flavours are frequently changed then unless the concentrations of all flavours is the same then substantive setup of the machine is required to ensure the correct amount of additional ingredient is added as a greater or lesser amount is needed depending on its characteristics. This is currently overcome by using ingredients which are all diluted such that an equivalent volume of all ingredients is added. This is not space efficient, does not give the required flexibility of change and, by increasing the volume of ingredient, unless it is pre-cooled, has a greater effect on the temperature of the dispensed beverage.

A further problem associated with current systems adapted to add an additional flavour to a base drink is that the brand owners, where applicable, of the base drink(s), for example Coca-cola (registered trade mark), can lose control of the quality of their products. Thus, it would be possible for a vendor to purchase additional flavours from any supplier and add them to a branded base drink which, if the additional flavours were of inferior quality, might have an adverse impact on the reputation of the base drink brand.

Additionally it is desirable to add other products besides flavours to a beverage, for example vitamin supplements or nutriceuticals. When adding such supplements it is important to control the substance that is dispensed, for example some products have a maximum daily allowance and some substances should not be taken together. It is important from a safety point of view that this is carefully controlled. It is therefore desirable to have a system that recognises the substance contained in the cartridge and have a control system which takes this into account.

DE 29905398 U1 discloses an arrangement utilising disposable reservoirs with identification means provided. WO 01/80174 A1 discloses the use of Radio Frequency Identification (RFID) tags on packaging.

The present invention seeks to provide an improved dispense apparatus for dispensing a beverage or other flowable foodstuff with one or more additional, flowable ingredients, for example flavour concentrates, whereby the consumer has an increased choice of beverage and the vendor has a high degree of flexibility for offering different options to the customer for promotional or other means with a greater protection from operator error for the consumer and which offers brand integrity for the brand owner.

According to the present invention there is provided an apparatus for dispensing a flowable foodstuff as defined in claim 1.

Preferably the identification contains at least information pertaining to the shelf life of the additional ingredients and the apparatus contains a means for automatically reading said information and only dispensing the ingredient provided it is within its shelf life.

By way of apparatus of the invention, therefore, a base foodstuff, for example a drink, may be customised by addition of a selected volume of additional ingredient in a way which reduces or eliminates the possibility of error of dispense and which preserves brand integrity. For example, the identification on the reservoir may contain information which relates to the maximum allowable dose of the ingredient contained therewithin and the control system uses the information to alter its settings to ensure that the user can not dispense too much of the additional ingredient, thus ruining the taste of the dispensed product.

In one preferred arrangement the information contained within the identification means is permanently associated with the cartridge and is read by the dispenser.

Preferably the identification means associated with each cartridge is, or contains, a radio frequency identification (RFID) tag, and the dispenser contains a reader for reading the RFID tag.

Preferably each position in the dispenser capable of receiving a cartridge has a reader associated with it and only detects and reads information from the RFID tag on the cartridge when it is in close proximity to the reader. Preferably the reader includes a short range reader circuit. Preferably the short range reader circuit includes an operating range limited to a few centimetres such that the reader does not communicate with the cartridge, and therefore does not read the information contained within the tag on the cartridge, until the cartridge is substantially inserted into the dispenser. Preferably the short range reader circuit includes a single operating frequency said single frequency preferably being above 13MHz thereby enabling the use of a low powered reader circuit.

The automatic reading of the information enables an operator to simply remove one reservoir of additional ingredient and replace it with another and the dispenser will read the identification means and automatically set its control parameters accordingly. In addition by having automated reading of the information an authenticity code can be incorporated within the information and the dispenser will only operate if it detects this authenticity code, thus protecting the brand owners from counterfeit and possibly lower quality ingredients than they would allow to be dispensed with their product. This is particularly relevant if the additional ingredient is a pharmaceutical product and where variations in the quality or concentrations of the ingredients would have a more serious effect for the consumer than merely affecting the flavour of their drink.

In one preferred embodiment the disposable containers for the additional ingredients are supplied with a means of identifying the product within each container, said identification means also incorporating a code to identify the product as an authorised product, and the apparatus include a means of reading the identification.

In an alternative preferred arrangement the information is stored on a bar code on the container or alternatively in magnetic form.

In an alternate preferred arrangement the information is initially written onto identification means permanently associated with the cartridge and the dispenser has a read / write capacity such that the dispenser can read the information on the cartridge and then write new information, or overwrite existing information back to the cartridge, for example the volume of ingredient remaining in the cartridge or the date of expiry of the active shelf life. Preferably the identification means is an RFID tag and the dispenser incorporates a RFID read writer. Alternatively the information may be stored on a read/write magnetic strip. Other means of storing data in an amendable form will be clear to those in the art.

Preferably the control electronics has a lock out function whereby it will not dispense a product if the data contained within the identification means does not indicate that it is an approved product within its shelf life, for example, a part of the information contained within the identification means could be an authorised product identifier and if this identifier is not present then the product will not dispense. Alternatively if the product is identified as an authorised product but the shelf life has expired then equally the product is prevented from dispensing.

In one preferred embodiment the apparatus is additionally provided with a means of disabling or destroying the means of identifying the disposable containers once they have been inserted into, and prior to them being removed from, the machine. This prevents the reuse of the containers by refilling with an inferior product.

Preferably once the control electronics has identified the volume of product in the reservoir, and the size of the doses it is dispensing, the electronics counts down how many doses of additional ingredient it has remaining. Preferably the number of dispenses remaining can be displayed or alternatively a warning is made prior to the reservoir running out.

Preferably where the dispenser contains a read only facility, the control electronics has a memory in which it stores data for each cartridge for a limited amount of time after it is removed from the dispenser. Such data stored would be, for example, a unique identifier for the cartridge, the number of dispenses remaining and its remaining active shelf life. If a cartridge is replaced in the dispenser after having been removed, the dispenser recognises it and knows how many dispenses of ingredient it is still containing. In addition if a cartridge part full cartridge is removed from the dispenser and is replaced some time later and the active shelf life of the product has passed then the dispenser will not dispense that ingredient. Once the reservoir is depleted the dispenser knows this and will not dispense any more from it - this prevents refilling of the containers for reuse in the same machine. Other data such as the concentration and shelf life can be re read every time a cartridge is replaced. Another benefit of this memory facility is that it will enable part used cartridges to be removed for servicing or cleaning of the dispenser and then enable the same half full cartridges to be replaced in the dispenser.

When nutraceuticals and other health products are being dispensed, for example vitamin supplements or heath beneficiary products (for example glucosamine) then there is generally a recommended allowable dose and consumers may want to have a varying amount up to this dose. In dispensing such products it is important not to dispense more that the recommended dose in one drink, thus it is a further advantage of the ingredient identification system that the system knows what is in each reservoir. In such uses the data contained within the ingredient recognition system may include the recommended maximum dispense and allowable increments thereof. In addition there are some supplements which are not recommended to be taken together, for example where possible side effects may combine. Preferably the control system can read information pertinent to non-compatibility of ingredients and prevent the dispense of two non compatible substances within the same beverage.

Preferably, the addition of the additional ingredient(s) is carried out in a selected one of a number of modes. These include, for example, adding the ingredient throughout the pour of the drink, injecting the ingredient into the bottom or top of the drink to achieve a layered effect or to have a ramp profile whereby a higher concentration is added to the top or bottom of the drink so as to achieve a gradient of ingredient concentration throughout the drink.

Preferably, the cartridge also contains a means of monitoring the temperature, and recording if it rises above, or falls below, a set point. Preferably this is part of the identification means and rising above, or falling below, a set point will influence the signal received when the dispenser reads the identification means when the cartridge is inserted into the dispenser. Preferably this is achieved by means of a small dedicated circuit containing a thermal fuse within the identification means or alternatively by way of selection of material composition within the identification means, for example if the identification means are magnetic, a magnetic material could lose a part of its magnetic coding above or below a certain temperature. Other methods will be apparent to those in the art.

In a preferred embodiment, the apparatus comprises means for supplying a base flowable foodstuff, means for receiving one or more disposable cartridges easily connectable and removable from the apparatus, the or each cartridge comprising a reservoir of an additional flowable ingredient and, integrated with the cartridge, dosing means for dosing, during dispense of the base foodstuff, a selected amount, e.g. up to 2ml, of the additional ingredient from the reservoir, a conduit through which the additional ingredient passes into the flow of base foodstuff via a non-return valve, the non-return valve preventing the flow of base foodstuff up the conduit towards the cartridge, means for inputting a signal to dispense the base foodstuff, means for optionally selecting one or more additional ingredients to be dispensed, a nozzle through which the base drink and any additional ingredient(s) flow and mix together before issuing from the apparatus for consumption and a control circuit to control the dispense of any additional ingredient which either forms part, or is associated with, a main control circuit for controlling dispense of the base flowable foodstuff.

In one preferred arrangement, the dosing means is a syringe pump, the plunger of which, when retracted, draws ingredient from the reservoir, through a small non-return inlet valve, into the body of the syringe, the volume of ingredient drawn, and dispensed, being dependant on the amount the plunger of the syringe pump is retracted. The plunger is then driven forwards expelling the ingredient from the body of the syringe and forcing it down a flexible conduit to a non-return valve, through which it passes to mix with the base drink. Preferably, the means of driving the syringe pump is a stepper motor with an associated gear to translate the motion to linear motion. Alternatively, the means of driving the syringe pump may be a linear motor or other linear motion device (e.g. rotor plus cam). Preferably the stepper motor always drives the piston of the syringe pump against a stop in one direction such that displacement always starts from a known position thereby overcoming problems of accurate volumetric displacement due to cumulative effects of missed steps of the stepper motor. Preferably this fixed stop is in the piston out position (i.e. pump is primed) so that the system is always ready to operate thereby removing the necessity to have a time delay to first prime the pump before dispensing the ingredient.

In another preferred arrangement the dosing means comprises a small dosing pump comprising a hollow plunger with an aperture therein, the plunger movable against a spring to pass through a seal such that the aperture passes from outside of the sealed chamber of the device to inside of the sealed chamber of the device opening a flowpath from the sealed chamber of the device through the hollow plunger, the plunger and seal element through which it passes then moveable in the chamber to reduce the volume of the camber, the fluid held therein being expelled via the aperture through the hollow plunger delivering a metered dose of ingredient. When the device is relaxed, springs move the plunger so the aperture passes though the seal and then the seal and plunger move together under the influence of a spring to draw fluid into the chamber via an inlet and a check valve. An example of such a dosing pump is part VP7/50 available from Valois. The dosing pump is driven by moving the end from which the fluid is expelled in relation to the body of the pump. Preferably this is achieved by placing the hollow plunger in a manifold such that it is located securely and the end of the plunger is in the base beverage flow path and the dosing pump is actuated by depressing the body of the dosing pump around the hollow plunger. In a preferred arrangement the actuation is done by means of an armature of a solenoid acting on the body of the pump. Preferably the conduit extends from the dosing pump to the reservoir.

In another preferred arrangement the dosing means is comprises a pump cavity defined by a rigid side and a flexible side, the flexible side being depressible in the direction of the rigid side to expel the ingredient contained within the cavity through a non return valve and the diaphragm which when released recovers elastically to its natural position, the elastic recovery drawing more ingredient from the reservoir into the cavity via a non return inlet valve such that it is then ready to dispense again. The non return valves are orientated such that the ingredient can only flow in the direction from the reservoir to mix with the base drink and not in the opposite direction. The pump cavity contains a fixed volume of ingredient which may be the volume of ingredient required for a beverage but which preferably is a smaller volume and a number of such volumes are dispensed into a beverage. The flexible side of the pump cavity is depressed by a reciprocating drive means which forms a part of the non-disposable part of the dispenser. Preferably the drive means is a reciprocating electro mechanical device, for example a solenoid, but may equally be any other means of providing a reciprocating means, for example a rotating element and cam. Preferably when the ingredient is depleted the flexible side of the pump chamber does not have sufficient flexural rigidity to overcome atmospheric pressure and return to its natural position. Preferably this can be sensed and be used to indicate when the reservoir is empty and needs replacing.

In another preferred arrangement the dosing means comprise a pump cavity defined by bellows which can be compressed, by a non disposable drive system, to reduce its internal volume and to expel an amount of ingredient through a conduit and non return valve into the base beverage and which, when released by the drive mechanism, recovers to substantially its original volume drawing in ingredient from the reservoir via a check valve. In a preferred arrangement the drive system is a solenoid which acts against the end of the bellows. Preferably the solenoid has a means of limiting the displacement of its armature to ensure the same displacement of the bellows occurs every time. In a preferred arrangement the bellows is aided in its return to its original position by means of a spring.

In another preferred arrangement, the dosing means comprises a small positive displacement pump, preferably a peristaltic type pump whereby the number of cycles of the pump determines the volume of ingredient dispensed, driving the additional ingredient from the reservoir down a flexible tube, forming one part of the pump, towards and out of a non-return valve through which it passes to mix with the base drink.

Preferably, the non-return valve between the pumping means and the base beverage is a tip valve made of moulded silicone rubber (or other food-compatible material) which in addition to functioning as a non-return valve to prevent the backflow of base drink towards the cartridge, also has a positive crack pressure to prevent the contents of the cartridge leaking out under gravity. Preferably, the end of the tip valve protrudes slightly into the flow (during dispense) of base drink such that the flow over it flushes the tip and thereby prevents cross-contamination of additional ingredient between drinks.

In a preferred arrangement the reservoir, inlet valve, dosing means, ingredient conduit and non-return valve form a single integrated disposable unit thus ensuring a sanitary system which dispenses with the need to regularly clean the ingredient side of the system as the latter is simply replaced each time the cartridge is replaced.

In an alternative preferred arrangement the inlet valve, dosing means, ingredient conduit and non return valve are supplied as one unitary piece and the reservoir is supplied as a second piece, the two parts connectable by a means of a one use connection, that is to say once the two parts have been connected they cannot be readily disconnected. This prevents reuse of parts of the system. Preferably the reservoir has a film or foil seal covering an outlet and the unitary piece containing the dosing means has an inlet tube extending therefrom for insertion into the reservoir through the film or foil, piercing it as it passes therethrough. Either within the reservoir outlet or on the inlet tube is a seal such that when the inlet tube is inserted into the reservoir outlet a fluid tight seal is made. Preferably this seal is an o-ring placed around the inlet tube. Preferably the inlet tube has a means of engaging with the reservoir outlet, for example a barbed ring, when it is inserted therein. In an alternative arrangement the means of engaging, for example the barbed ring, forms a seal with the reservoir outlet, removing the necessity for a separate seal. Preferably the action of inserting the inlet tube into the reservoir inlet will force ingredient into the dosing means and conduit substantially filling this area and priming the system ready for use with minimum wastage. This is achieved by careful matching of the swept volume of the inlet tube with the internal volume of the dosing means and conduit.

Apparatus of the invention may be designed to be easily applied to any of a number of the methods of producing a pre-mix or post-mix drink and such that the addition of the ingredient cartridges does not interfere with the valves and controls already associated with such systems. Preferably, located in a point of sale dispenser constructed in accordance with the invention, is an area capable of receiving a number of disposable cartridges, each cartridge having means for easily attaching and detaching it. Preferably, such means comprises a small cam lever that secures the cartridge in place upon insertion of the cartridge but which can be manually manipulated to permit removal of the cartridge. Preferably, means for identifying if each cartridge is present is provided, for example a small microswitch associated with each said cartridge which sends an electrical signal to the control circuit. Preferably, if an additional ingredient requested by the user is not available then a message to that effect is sent back to the user either visually or by use of sound or other sensory means.

In a preferred arrangement, an array of cartridges sits on a base plate which contains the means of identifying the presence and/or contents of the cartridge, the latching mechanisms to secure the cartridges in place and also means for operating the syringe pumps. Preferably this base plate is hinged or easily detachable such that it can easily be moved out of the way for purpose of servicing the apparatus.

While this apparatus is largely directed to the addition of additional ingredients to beverages it is equally applicable to other flowable foodstuffs, for example yoghurts or sauces.

Embodiments of the invention will now be described, by way of example only, with reference to the following drawings in which:
**Figure 1** is a schematic diagram of an apparatus of the invention;
**Figure 2** is a diagram of an ingredient cartridge suitable for use in apparatus of the invention with a piston type;
**Figure 3** shows a flexible bag contained in the cartridge of Fig 2;
**Figure 4** is a diagram of an alternative design of ingredient cartridge;
**Figure 5** is a perspective view of an apparatus of the invention; and
**Figure 6** is an internal view of part of the apparatus shown in Figure 5.
**Figures 7 to 12** are diagrams of an alternative cartridge design in accordance with the invention;
**Figure 13** is a diagram of an alternative design of ingredient cartridge;
**Figure 14** is a perspective view of the invention; and
**Figure 15** is a partially cut away view of the pumping mechanism shown in Figure 14.

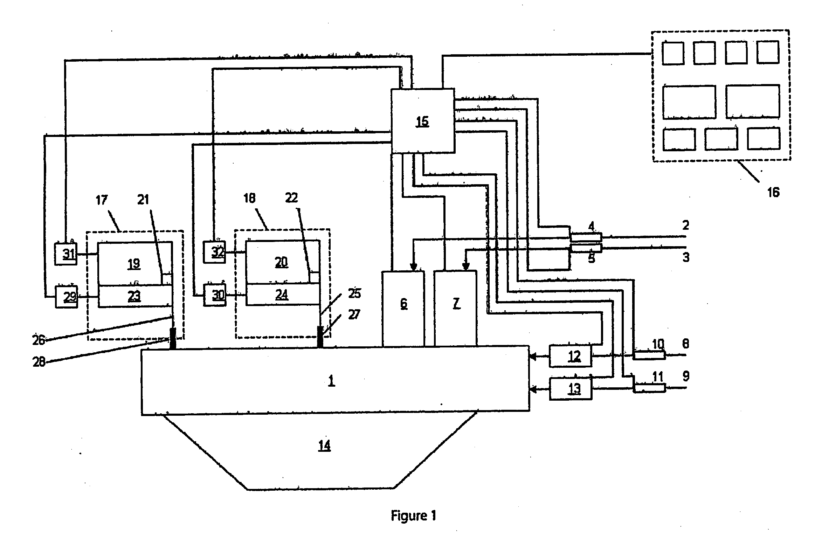

Referring to Figure 1, a system for the production of a beverage with the option to add extra ingredients to a base drink is shown in which a manifold 1 is supplied with a source of carbonated water and a source of uncarbonated water, via conduits 2 and 3, the flow of which is measured by flow measurement devices 4 and 5 and controlled by valves 6 and 7, and two sources of flavoured concentrate, via conduits 8 and 9, the flow of which is measured by flow measurement devices 10 and 11 and controlled by valves 12 and 13. Attached to the manifold 1 is a nozzle 14 through which the dispensed beverage flows into the cup. The nozzle contains internal detail as known in the art to promote mixture of the water and concentrate. A control unit 15 selectively actuates the valves 6, 7, 12, 13 in response to an input from the customer interface 16 and signals from flow measurement devices 4, 5, 10, 11 to create a drink of controlled proportional mix of concentrate and diluent. This makes up the base mix for the drink and this part of the system is widely known in the art. In addition, two removable disposable cartridges 17, 18 are provided, each consisting of an ingredient reservoir 19, 20 connecting via a non return valve 21, 22 to a syringe measurement element 23, 24 and a flexible ingredient conduit 25, 26 leading from the syringe measurement element 23, 24 to a tip valve 27, 28, the tip valves 27, 28 interfacing with the manifold 1. Linear stepper motors 29, 30 are selectively movable in response to a signal from the control unit 15 on input of a command to the customer interface, specifying an additional ingredient be added to the beverage. The stepper motors 29, 30 may draw into, and pump from, the syringe measurement element 23, 24 a varying amount of ingredient, dependant on the concentration of the ingredient and the amount required by the customer. The control unit knows of the presence of a cartridge 17, 18 by means of a signal from microswitch 31, 32 which forms part of the unit (not cartridge) and is activated when the cartridge is fully inserted. The cartridges 17 and 18 have identification means (not shown) and the dispenser has means (not shown) of reading said identification means and the controller 15 uses said information in the dispense of the ingredient.

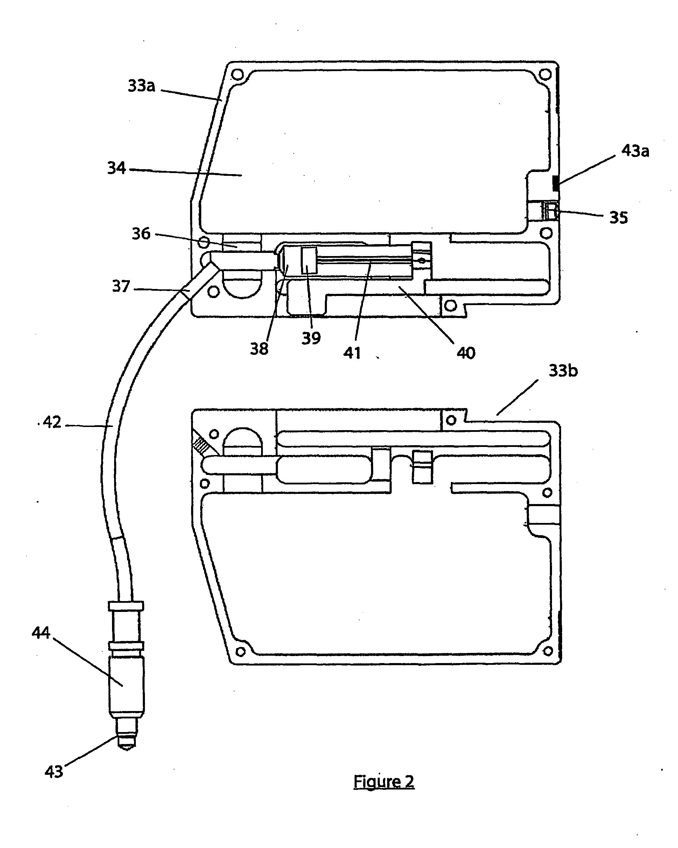

Referring to Figure 2 a disposable ingredient cartridge is shown, comprising a moulded plastic two-piece shell 33a, 33b an ingredient reservoir 34 with a one way valve 35 leading into it for filling the reservoir with ingredient. Two non return valves 36, 37 lead into and out of a variable chamber 38, the size of the chamber being varied by movement of the pump piston 39 attached to a drive member 40 connectable to an external drive (not shown), via the piston shaft 41, such that when the drive member 40 is driven in one direction the piston 39 moves drawing ingredient from the reservoir 34 through non return valve 36 and into chamber 38, and when the drive member 40 is driven in the other direction the piston 39 pushes the ingredient out of chamber 38, through non return valve 37, down the flexible tube 42 and out of tip valve 43. The tip valve 43 is attached to a mounting piece 44 receivable by the apparatus (not shown) such that the tip valve will be in the diluent flow. The cartridge has a RFID tag 43a contained within it which contains coded information relating to the fluid contained within the reservoir 34, for example the fluid type and, its concentration.

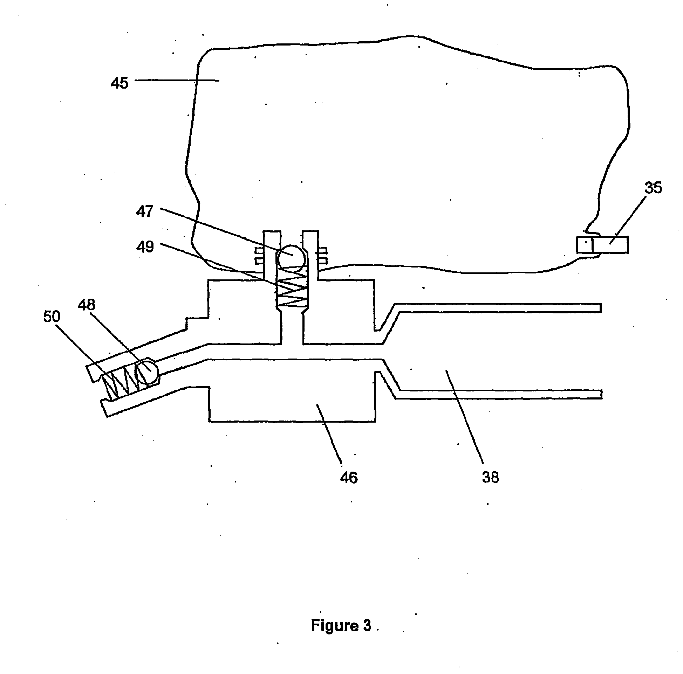

Referring to Figure 3 an element of a cartridge is shown in which the plastic housing (33a, 33b of Figure 2) have a contained removable element consisting of a flexible bag 45 containing a small valve 35 for filling the bag with ingredient, a plastic moulding 46 connected to the bag 45 which contains non return valves (36, 37 of Figure 2) comprising of ball elements 47, 48 and springs 49, 50. The moulding 46 forms a chamber 38 in which the piston (not shown) slides drawing ingredient into and expelling ingredient from the chamber 38.

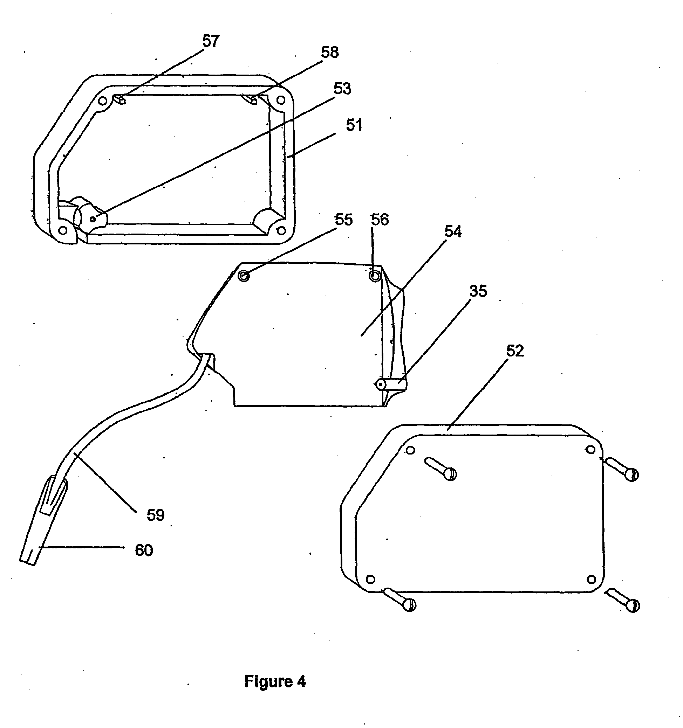

Referring to Figure 4 a cartridge is shown consisting of a moulded two piece shell 51, 52, one part of which 51 has attached to it the rotary part of a peristaltic pump 53, which is capable of accepting the drive shaft of an external rotary drive (not shown). A flexible bag 54 containing two mount holes 55, 56, to retain it on pins 57, 58 of the shell 51, and a valve 35, for filling the bag, has a flexible tube 59 leading from it which passes between the rotary part of a peristaltic pump 53, and a feature moulded on the shell such that when the pump part 53 rotates ingredient is drawn from the bag and expelled from the tip valve 60 and into the beverage. The cartridge also has identification means such as exemplified in Figure 2 (not shown).

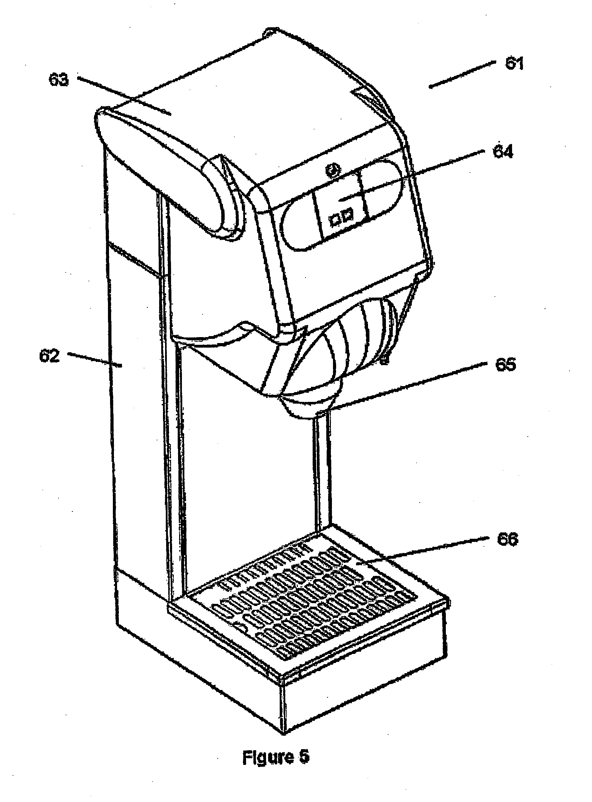

Referring to Figure 5 a point of sale beverage dispenser 61 is shown comprising a body 62 which contains the majority of the electronics for the control of the unit on which is mounted a head unit containing the working parts enclosed by a cover 63 liftable for servicing the unit. The cover 63 has a touch screen 64 for the user to interact with the unit enabling the user to select a beverage which is then dispensed through nozzle 65 into a receptacle (not shown). A drip tray 66 is provided to catch any drips.

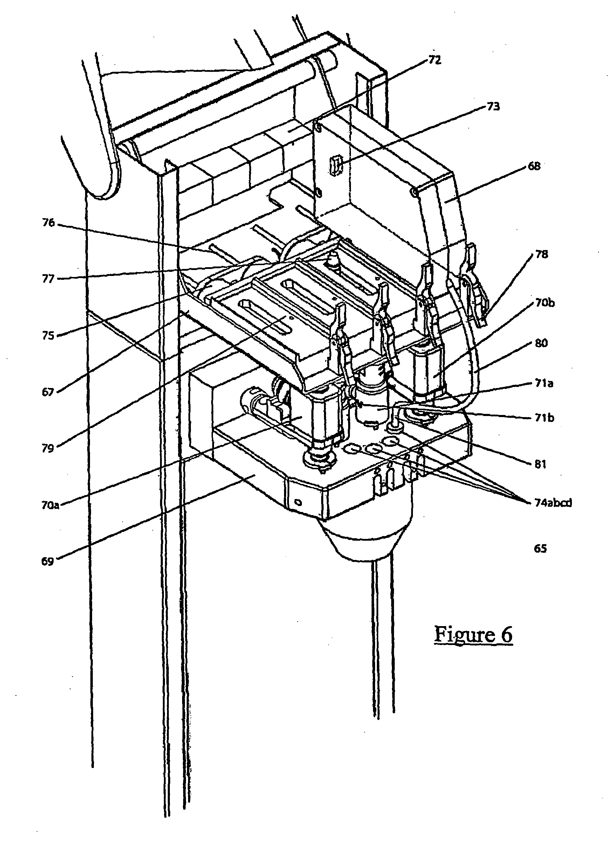

Referring to Figures 5 and 6 a dispenser is shown to dispense a beverage and optionally add one or more additional ingredients to the beverage as it is dispensed.

Referring to Figure 6 the working parts of a beverage dispenser are shown comprising a platform 67, pivotal to enable access to those parts below, adapted to receive and dispense ingredient from four disposable cartridges 68 (only one shown for clarity), a manifold block 69, in communication with two syrup valves 70a, 70b, a water and carbonated water valve 71a, 71b, reading means 72 for reading data contained within a readable means 73 on the cartridge, four positions 74a, b, c, d, for receiving the ingredients and a nozzle 65 through which the beverage will be dispensed. The platform 67 comprises four locations to accept ingredient cartridges, each location having associated with it a stepper motor 75 communicable via a drive shaft 76 to a displacement pin 77 which communicates with the pump (not shown) of the cartridge 68, a cam lock 78 to retain the cartridges in place and a microswitch 79 to indicate that a cartridge is in place. The readers 72 contain circuitry which via radio frequency read the data contained within the readable means 73 when they are in close proximation thereto. The readable means are RFID tags and the readers contain low power short range circuitry. The range of the circuitry is preferably tuned so that a reader circuit can detect and receive the data from a readable means from a cartridge placed in position in front of it, but does not have sufficient range for crosstalk between adjacent cartridges to occur.

Referring to Figures 5 and 6 a customised drink is prepared by the user selecting, via the touch screen 64, the base flavour for the drink and whether it is to be carbonated or uncarbonated. A choice of custom ingredients and then a mode of addition are then offered, also via the touch screen 64, for the user to select. The drink is then dispensed by the diluent (water/carbonated water) valve 72/73 and base syrup valve 70/71 opening to give a constant ratiometric mix between the two. Momentarily after the diluent has started to flow (or later if desired by the customer) the stepper motors 75 draw the required ingredients from the reservoirs and dispense them via the flexible tube 80 and through the tip valve 81 into the diluent flow in the manner required, the ingredient flow stopping before the diluent flow such that any custom flavour is flushed from the system.

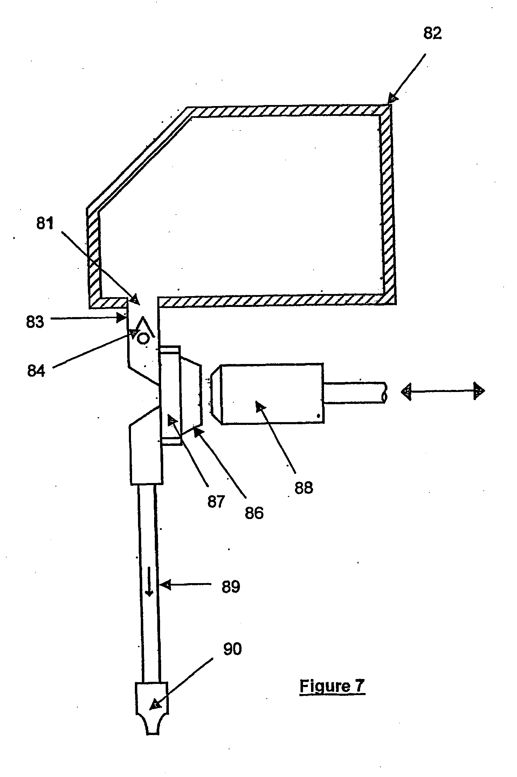

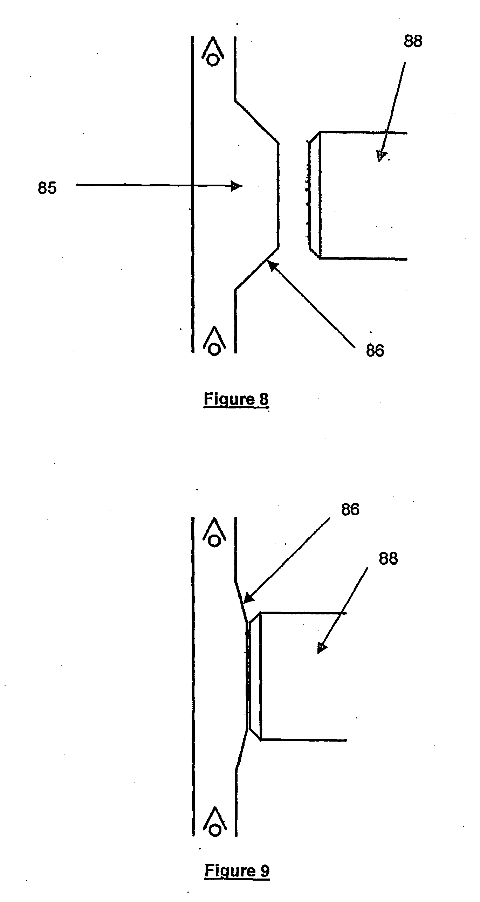

Referring to Figure 7, 8 and 9 a disposable reservoir and metering device are shown. The reservoir 82 contains the ingredient to be dispensed and has an outlet 81 through which the ingredient can pass to enter, via an inlet section 83 containing a check valve 84, the pump volume 85 enclosed by a flexible diaphragm 86 and a plastic body 87. The diaphragm 86 in its relaxed state extends away from the body 87 such that in that position the pump full of ingredient, i.e. it is primed, and is ready to dispense. In use, when required, a signal is received by the pump drive (not shown) which then actuates to move the drive head 88 to depress the diaphragm and expel the ingredient within the pump volume 85 into the conduit 89 in the direction of the base beverage. The end of the conduit 89 terminates in a check valve 90, the tip of which, in use, extends into the flow of the base beverage. The cartridge also has identification means such as exemplified in Figure 2 (not shown).

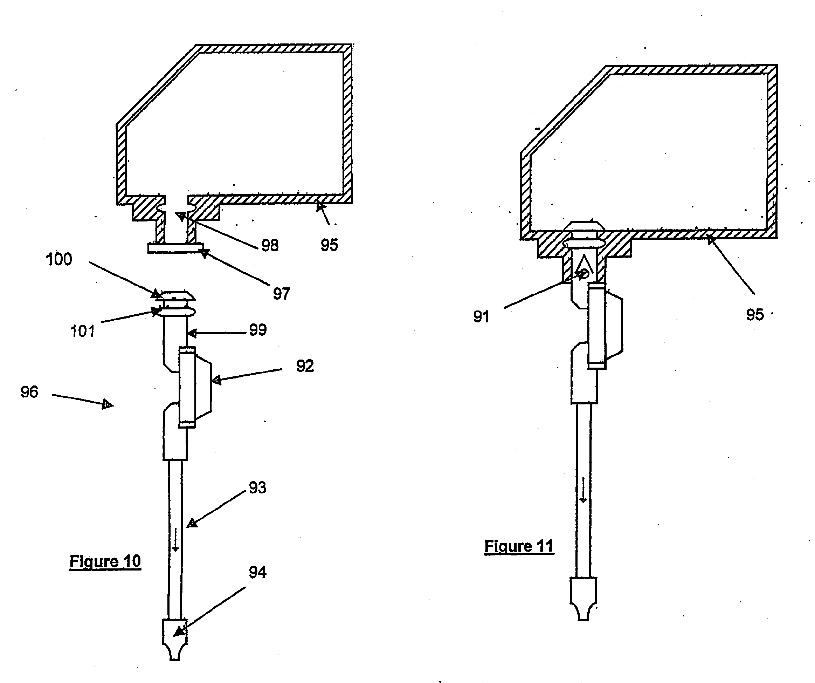

Referring to Figure 10 and 11 a disposable reservoir and metering pump is shown in which the inlet valve 91, dosing means 92, ingredient conduit 93 and non return valve 94 are supplied as one unitary piece 96 and the reservoir 95 is supplied as a separate component, the two parts connectable by a means of a one use connection, that is to say once the two parts have been connected they cannot be readily disconnected so as to prevent reuse of parts of the system. The reservoir 95 has a film or foil seal 97 covering its outlet 98 and the unitary piece 96 containing the dosing means has an inlet tube 99 extending from it which prior to being placed in the dispenser is inserted into the reservoir 95 through the film 97. The inlet tube 99 terminated in a barbed ring 100 which locks the unitary piece 96 in place in the reservoir 95 combining them into one inseparable piece. The inlet tube 99 has placed on it towards the barbed ring 100 has an o-ring 101 which sealingly engages the reservoir when it is inserted into it. The cartridge also has identification means such as exemplified in Figure 2 (not shown).

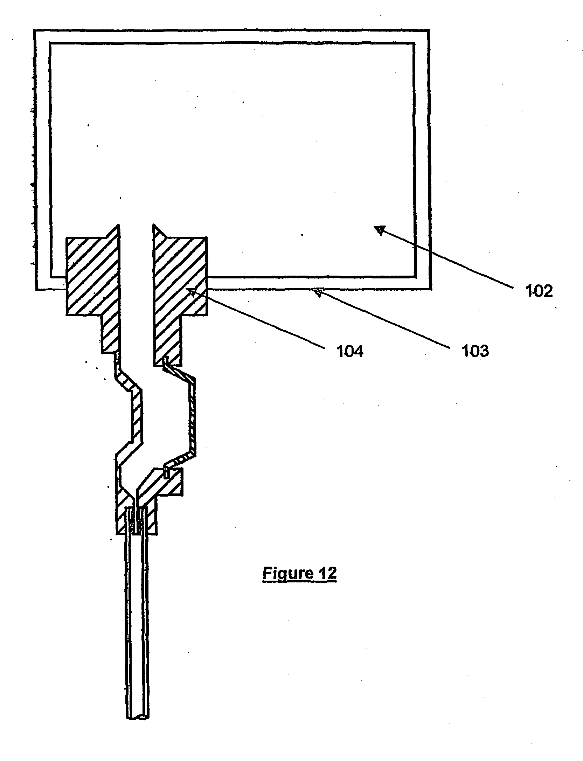

Referring to Figure 12 a unitary pump and reservoir is shown in which a diaphragm pump as described in relation to Figures 7, 8 and 9 is shown in which the reservoir is a flexible bag 102 which is heat welded around its perimeter 103 to enclose a space within, and also heat welded onto the pump element 104 to form a single unitary piece. Optionally the flexible bag may be housed in a rigid container also housing the identification means (not shown) for protection.

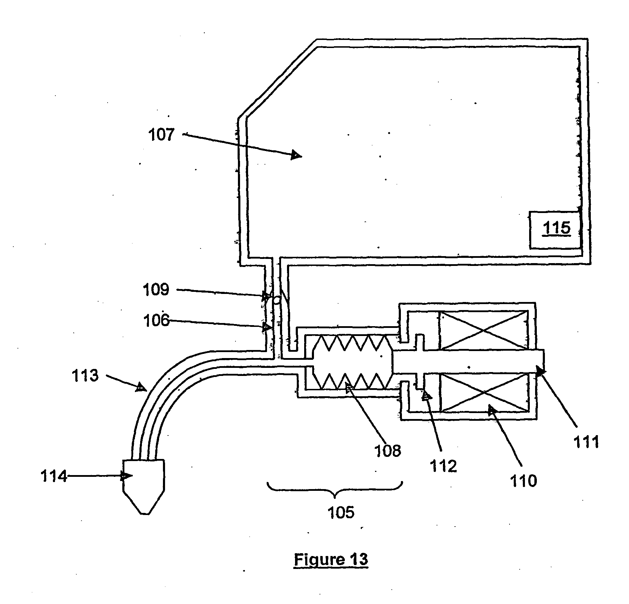

Referring to Figure 13 a disposable pump and reservoir is shown. The pump 105 comprises an inlet passage 106 between the reservoir 107 and a variable volume bellows 108, the inlet passage 106 contains a check valve 109. The bellows 108 is compressed by a non disposable pump drive comprising a solenoid 110 and an armature 111. The movement of the armature 111 is restricted in its displacement by means of an end stop 112 to ensure that the displacement of the end of the bellows 108 is constant. When compressed the internal volume of the bellows 108 is reduced and some of the ingredient contained therewithin is ejected from the bellows 108 via a conduit 113 which terminates in a check valve 114. The check valve is a split silicone tip type valve which opens under a positive upstream pressure. In use the end of the check valve 114 is positioned such that its end protrudes into the flow of the base beverage such that when a beverage is dispensed with an additional flavour from the reservoir 107 the flow of the base beverage flushes the end of the check valve removing any drips from its end and preventing cross contamination of flavour between consecutive drinks. When the pump has displaced the ingredient into the base beverage the solenoid armature 111 retracts and the bellows 109 recovers to its original dimension drawing ingredient in from the reservoir 107 via check valve 109 as its internal volume expands. The cartridge also has identification means such as exemplified in Figure 2 (not shown).

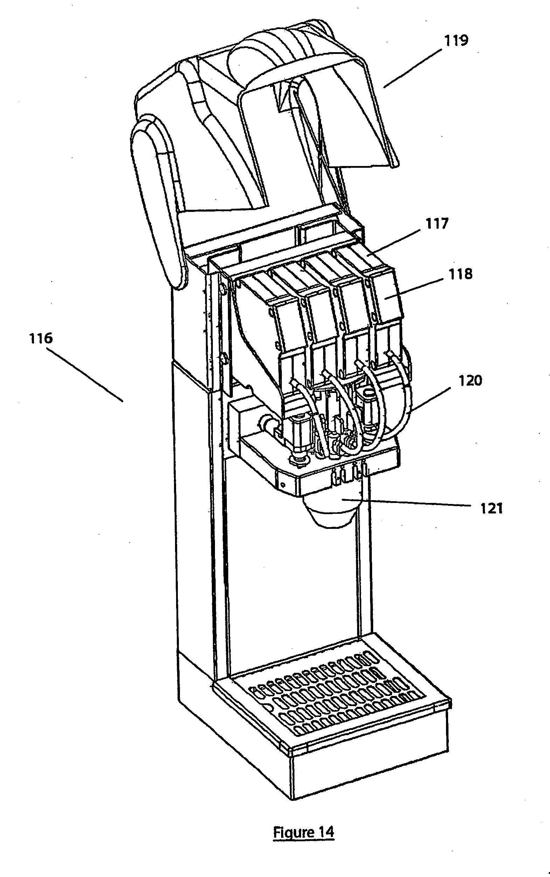

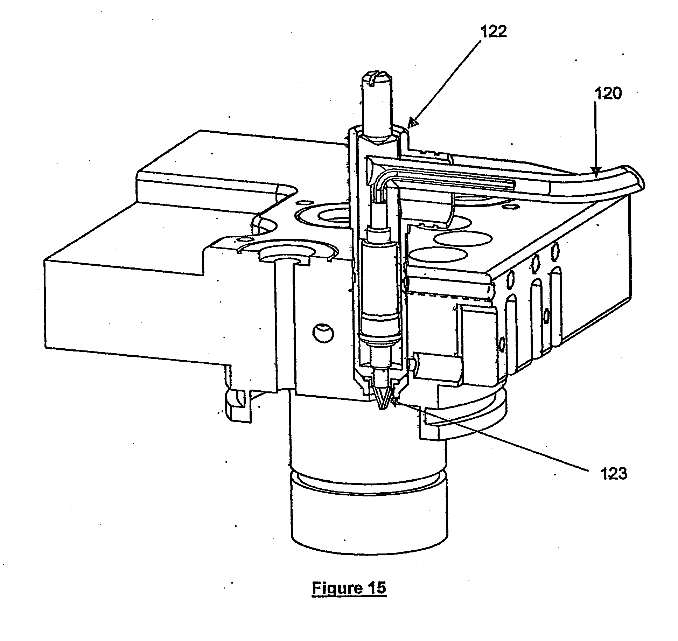

Referring to Figure 14 and 15 a drinks dispenser and pump are shown. The dispenser 116 houses 4 ingredient cartridges reservoirs 117, on the front of the cartridges is a magnetic code strip 118 which contains data pertinent to the ingredient within the reservoir 117. A pivoted cover 119 houses a magnetic code read / writer (hidden) on its underside which, when the cover 119 is pivoted down into its operational position, pass over the magnetic code strips 118 and reads the information thereon. The dispenser 116 then uses the information read from the magnetic strip 118 to control the dispense of the additional ingredient from the reservoir 117 through a conduit 120 into the dispensing nozzle 121, via a dosing pump 122 terminating in tip valve 123, where it mixes with the base beverage as it is dispensed therefrom. The dosing pump 122 (for example part VP7/50 available from Valois) measures and doses a defined small sized dose of additional ingredient. The dosing pump 122 may be actuated a number of times to produce a dose size which is a multiple of a single dose size. The control system uses some of the data pertinent to the ingredient in controlling the number of actuations of the dosing pump 122.

## Claims

1. A beverage dispenser for dispensing a flowable foodstuff and, optionally, a selected volume of one or more additional ingredients for enhancing the flavour or nutritional value of the base beverage, the dispenser comprising:
a) means to supply a metered amount of the base beverage
b) a plurality of reservoirs (19,20) each containing an additional ingredient and each having an associated dosing device adapted to dispense, through a non-return valve (21,22,36,37), a selected volume of additional ingredient; and
c) means to enable the user optionally to cause the dispenser to dispense a selected one or more of said additional ingredients into the base beverage,
**characterised in that**: the reservoir (19,20) and dosing device are disposable and together form a disposable cartridge (17,18,68) which is inserted into and removed from the dispenser (61) as one component, where the disposable cartridge (17,18,68) comprises a reservoir (19,20) of ingredient, a means of metering and dosing a quantity of the ingredient, a first non-return valve (21,22) placed between the reservoir (19,20) and metering means allowing flow from the reservoir (19,20) to the metering means but not in the opposite direction and a conduit leading from the metering means to a second non return valve through which the ingredient can be dosed into the base beverage within the dispenser, and
wherein the disposable reservoir (19,20) has associated therewith an identification means (73) comprising information pertaining to at least one of: the volume of the ingredient in the reservoir, the shelf life of the ingredient, the active shelf life of the ingredient, data identifying the ingredient to be bona fide, non compatibility with other ingredients and the maximum allowable dose size; and wherein the apparatus contains a means for automatically reading and utilising said information comprised in the identification means (73) in the control of the dispense of said additional ingredients.

2. A beverage dispenser according to Claim 1 wherein the identification means (73) contains at least information pertaining to the shelf life of the additional ingredients and the apparatus contains a means for automatically reading said information and only dispensing the ingredient provided it is within its shelf life.

3. A beverage dispenser according to Claim 1 in which the identification means is an RF transmitter device (73), data from which is read by the dispenser when the reservoir (19,20), or cartridge (17,18,68), containing the RF transmitter (73) is placed in close proximity to a RF reader circuit (72).

4. A beverage dispenser according to Claim 3 in which each position within the dispenser for accepting a reservoir (19,20) or cartridge (17,18,68) has an associated RF reader circuit (72).

5. A beverage dispenser according to Claim 4 in which the RF reader circuits (72) are short range reader circuits.

6. A beverage dispenser according to Claim 5 in which the range of the RF reader circuits (72) is tuned such that each circuit can only read data from the RF transmitter (73) associated with a reservoir (19,20) or cartridge (17,18,68) placed in the position on or within the dispenser (61) that the RF reader (72) circuit is associated with.

7. A beverage dispenser according to Claims 3 to 6 wherein the receiver circuit (72) transmits a signal which activates the transmitter (73), and then receives the signal transmitted by the activated transmitter (73).

8. A beverage dispenser according to Claim 7 in which the receiver circuit (72) is operating at a frequency of at least 13MHz.

9. A beverage dispenser according to Claims 1 to 8 wherein an electronic control system (15) counts the number of doses or volume of ingredient remaining.

10. A beverage dispenser according to Claim 9 wherein the dispenser can display the number of doses or the volume of ingredient remaining.

11. A beverage dispenser according to Claim 10 wherein the control system (15) stores, at least temporarily, data pertinent to each cartridge (17,18,68).

12. A beverage dispenser according to Claim 11 wherein the control system (15) stores data relating to the number of doses, or the volume of ingredient, dispensed from a cartridge (17,18,68).

13. A beverage dispenser according to Claim 1 wherein the information is initially written onto an identification means (73) permanently associated with the cartridge (17,18,68) and the dispenser has a read / write capacity such that the dispenser can read the information on the cartridge (17,18,68) and then write new information onto the cartridge (17,18,68).

14. A beverage dispenser according to Claim 13 in which the read writer incorporated within the dispenser overwrites some of the data on the identification means (73).

15. A beverage dispenser according to Claim 13 or Claim 14 wherein the identification means (73) is an RFID tag (43a) and the dispenser incorporates a RFID read writer.

16. A beverage dispenser according to Claim 13 or Claim 14 wherein the information may be stored on a read/write magnetic strip.

17. A beverage dispenser according to Claim 1 in which the dosing means is driven by a non disposable drive means incorporated within the dispenser.

18. A beverage dispenser according to Claim 1 in which the dosing means is a syringe pump (23,24), the ingredient being dosed by retracting a plunger associated within the syringe to draw ingredient from the reservoir (19,20) into the body of the syringe, the metered volume of ingredient drawn in being dependant on the distance the plunger of the syringe pump is retracted, and advancing the plunger within the syringe to expel the fluid from within through a conduit (42) and valve (43) into the base beverage with which it mixes.

19. A beverage dispenser according to Claim 18 in which the plunger is removably interfaced with a linear drive means (40).

20. A beverage dispenser according to Claim 19 in which the linear drive element (40) is a stepper motor with associated gear mechanism to translate the rotary motion to linear motion.

21. A beverage dispenser according to Claim 20 in which the drive means (40) drives against a fixed stop in one direction such that the displacement always starts from a known reference point.

22. A beverage dispenser according to Claim 21 in which the fixed stop is in the plunger out position (i.e. pump is primed) so that the system is always ready to operate thereby removing the necessity to have a time delay to first prime the pump before dispensing the ingredient.

23. A beverage dispenser according to Claim 22 wherein the end of the non return valve protrudes slightly into the flow of base drink such that the flow over it flushes the tip and thereby prevents cross-contamination of additional ingredient between drinks.

24. A beverage dispenser according to Claim 23 wherein the non-return valve between the pumping means and the base beverage is a tip valve (27,28,43,60) with a positive crack pressure to prevent the contents of the cartridge (17,18,68) leaking out under gravity.

25. A beverage dispenser according to Claim 1 wherein the reservoir (19,20), first non return valve (21,22), dosing means, ingredient conduit, second non-return valve and identification means (73) form a single integrated disposable unit thus ensuring a sanitary system which dispenses with the need to regularly clean the ingredient side of the system as the latter is simply replaced each time the cartridge (17,18,68) is replaced.

26. A beverage dispenser according to Claim 1 wherein the first non return valve (21,22), dosing means, ingredient conduit and second non return valve are supplied as one unitary element and the reservoir (19,20) is supplied as a second piece, the two parts connectable by a means of a single use connection.

27. A beverage dispenser according to Claim 26 wherein the reservoir (19,20) has a film or foil seal covering an outlet and the unitary element containing the dosing means has an inlet tube extending therefrom for insertion into the reservoir (19,20) through the film or foil, piercing it as it passes therethrough.

## Patentansprüche

1. Getränkespender zur Ausgabe eines fließfähigen Nahrungsmittels und wahlweise eines gewählten Volumens von einem oder mehreren zusätzlichen Bestandteilen zur Verbesserung des Geschmacks oder Nährwerts des Grundgetränkes, wobei der Spender folgendes umfasst:
a) ein Mittel zur Abgabe einer gemessenen Menge des Grundgetränkes
b) eine Anzahl von Vorratsbehältern (19, 20), welche je einen zusätzlichen Bestandteil enthalten und je eine dazugehörige Dosiervorrichtung aufweisen, die geeignet ist, durch ein Einwegeventil (21, 22, 36, 37) eines gewählten Volumens eines zusätzlichen Bestandteils abzugeben, und
c) Mittel, die es dem Benutzer ermöglichen, wahlweise den Spender dazu zu bringen, einen gewählten, von ein oder mehreren genannter zusätzlicher Bestandteile in das Grundgetränk abzugeben,
**dadurch gekennzeichnet, dass** der Vorratsbehälter (19, 20) und die Dosiervorrichtung verwerfbar sind und zusammen eine verwerfbare Patrone oder Einwegepatrone (17, 18, 68) zu bilden, welche in den Spender (61) als ein Bauteil eingesetzt oder aus diesem entfernt wird, wobei die Einwegpatrone (17, 18, 68) einen Vorratsbehälter (19, 20) des Bestandteils, ein Mittel zum Messen und Dosieren einer Menge des Bestandteils, ein erstes Einwegeventil (21, 22), welches zwischen dem Vorratsbehälter (19, 20) und der Messeinrichtung angeordnet ist, welches es ermöglicht, dass die Strömung aus dem Vorratsbehälter (19, 20) zu der Messeinrichtung, jedoch nicht in entgegengesetzter Richtung fließen kann, und eine Leitung umfasst, welche von der Messeinrichtung zu einem zweiten Einwegeventil führt, durch welches der Bestandteil in das Grundgetränk innerhalb des Spenders zugemessen und dosiert werden kann, und wobei der verwerfbare Vorratsbehälter (19, 20) ein Identifizierungsmittel (73) als Bestandteil umfasst, welches eine Information enthält, die mindestens eine der folgenden Größen betrifft: das Volumen des Bestandteils in dem Vorratsbehälter, die Haltbarkeit oder Lebensdauer des Bestandteils, die aktive Lebensdauer des Bestandteils, Daten, welche den Bestandteil bona fide identifizieren, die Nichtverträglichkeit mit anderen Bestandteilen und die maximale Größe einer Dosis, und wobei die Vorrichtung ein Mittel enthält, um selbsttätig die in dem Identifikationsmittel (73) enthaltene Information zu lesen und zu benutzen bei der Steuerung der Abgabe des zusätzlichen Bestandteils.

2. Getränkespender nach Anspruch 1, wobei das Identifikationsmittel (73) mindestens die die Haltbarkeit des zusätzlichen Bestandteils betreffende Information enthält und die Vorrichtung ein Mittel enthält, um selbsttätig diese Information zu lösen und den damit versehenen Bestandteil lediglich innerhalb seiner Haltbarkeitszeit abzugeben.

3. Getränkespender nach Anspruch 1, bei welchem das Identifikationsmittel eine Hochfrequenzsendeeinrichtung (73) ist, wobei hiervon stammende Daten durch den Spender gelesen werden, wenn der Vorratsbehälter (19, 20) oder die Patrone (17, 18, 68), die den Hochfrequenzsender (73) enthält, in dichter Nähe an einer Hochfrequenzleseschaltung (72) angeordnet wird.

4. Getränkespender nach Anspruch 3, wobei jede Position in dem Spender zur Aufnahme eines Vorratsbehälters (19, 20) oder einer Patrone (17, 18, 68) eine dazugehörige Hochfrequenzleseschaltung (72) aufweist.

5. Getränkespender nach Anspruch 4, wobei die Hochfrequenzleseschaltungen (72) Nahbereichsleseschaltungen sind.

6. Getränkespender nach Anspruch 5, wobei der Bereich der Hochfrequenzleseschaltungen (72) derart abgestimmt wird, dass jede Schaltung lediglich Daten von dem Hochfrequenzsender (73) lesen kann, die mit einem Vorratsbehälter (19, 20) oder einer Patrone (17, 18, 68) verbunden sind, welche in der Position an oder innerhalb des Spenders (61) angeordnet ist, mit welcher die Hochfrequenzleseschaltung verbunden ist.

7. Getränkespender nach den Ansprüchen 3 bis 6, wobei die Empfangsschaltung (72) ein Signal sendet, welches den Sender (73) aktiviert und danach das durch den aktivierten Sender (73) gesendete Signal empfängt.

8. Getränkespender nach Anspruch 7, wobei die Empfängerschaltung (72) bei einer Frequenz von mindestens 13 MHz arbeitet.

9. Getränkespender nach einem der Ansprüche 1 bis 8, wobei ein elektronisches Steuersystem (15) die Anzahl von Dosen oder das Volumen des verbleibenden Bestandteils zählt.

10. Getränkespender nach Anspruch 9, wobei der Spender die Anzahl von Dosen oder das Volumen des verbleibenden Bestandteils anzeigen kann.

11. Getränkespender nach Anspruch 10, wobei das Steuersystem (15) zumindest zeitweise die jede Patrone (17, 18, 68) betreffenden Daten speichert.

12. Getränkespender nach Anspruch 11, wobei das Steuersystem (15) Daten betreffend die Anzahl von Dosen oder das Volumen des Bestandteils, welcher aus einer Patrone (17, 18, 68) abgegeben wird, speichert.

13. Getränkespender nach Anspruch 1, wobei die Information anfänglich in ein Identifikationsmittel (73) eingeschrieben wird, welches permanent mit der Patrone (17, 18, 68) verbunden ist, und wobei der Spender eine Lese/Schreib-Kapazität aufweist, derart, dass der Spender die Information auf der Patrone (17, 18, 68) lesen und danach eine neue Information auf die Patrone (17, 18, 68) schreiben kann.

14. Getränkespender nach Anspruch 13, wobei die Lese/SchreibEinrichtung, die innerhalb des Spenders enthalten ist, einige der Daten auf dem Identifikationsmittel (73) überschreibt.

15. Getränkespender nach Anspruch 13 oder Anspruch 14, wobei das Identifikationsmittel (73) ein RFID-Etikett (43a) ist und der Spender eine RFID-Lese/Schreib-Einrichtung enthält.

16. Getränkespender nach Anspruch 13 oder Anspruch 14, wobei die Information auf einem Lese/Schreib-Magnetstreifen gespeichert werden kann.

17. Getränkespender nach Anspruch 1, wobei das Dosiermittel durch eine nicht verwerfbare Antriebseinrichtung angetrieben ist, die in dem Spender eingebaut ist.

18. Getränkespender nach Anspruch 1, wobei das Dosiermittel eine Spritzpumpe (23,2 4) ist, der Bestandteil dosiert wird, indem ein innerhalb der Spritze angeordneter Kolben zurückgezogen wird, um den Bestandteil aus einem Vorratsbehälter (19, 20) in das Gehäuse der Spritze einzusaugen, das gemessene Volumen des eingesaugten Bestandteils von der Strecke abhängt, um welche der Kolben der Spritzenpumpe zurückgezogen wird, und wobei der Kolben innerhalb der Spritze vorgeschoben wird, um die Flüssigkeit vom Inneren durch eine Leitung (42) und ein Ventil (43) in das Grundgetränk auszustoßen, mit welchem sich der Bestandteil mischt.

19. Getränkespender nach Anspruch 18, wobei der Kolben lösbar mit einer linearen Antriebseinrichtung (40) verbunden ist.

20. Getränkespender nach Anspruch 19, wobei das lineare Antriebselement (40) ein Schrittmotor mit einem dazugehörigen Getriebemechanismus ist, um die Drehbewegung in eine Linearbewegung umzuwandeln.

21. Getränkespender nach Anspruch 20, wobei die Antriebseinrichtung (40) gegen einen feststehenden Anschlag in einer Richtung antreibt, derart, dass die Verschiebung jedes Mal von einem bekannten Bezugspunkt ausgeht.

22. Getränkespender nach Anspruch 21, wobei der feststehende Anschlag in der herausgezogenen Stellung des Kolbens liegt (d.h. die Pumpe ist gefüllt), so dass das System ständig bereit steht, zu arbeiten, wodurch die Notwendigkeit vermieden wird, eine Zeitverzögerung vorzusehen, um die Pumpe zunächst zu füllen, ehe der Bestandteil abgegeben wird.

23. Getränkespender nach Anspruch 22, wobei das Ende des Einwegeventils geringfügig in die Strömung des Grundgetränkes vorsteht, so dass die darüber führende Strömung die Spitze spült und dadurch eine über Kreuz erfolgende Verunreinigung des zusätzlichen Bestandteils zwischen den Einzelgetränken verhindert.

24. Getränkespender nach Anspruch 23, wobei das Einwegeventil zwischen der Pumpeinrichtung und dem Grundgetränk ein Spitzenventil (27, 28, 43, 60) mit einem positiven Öffnungsdruck ist, um zu verhindern, dass der Inhalt der Patrone (17, 18, 68) unter Schwerkraftwirkung herausleckt.

25. Getränkespender nach Anspruch 1, wobei der Vorratsbehälter (19, 20), das erste Einwegeventil (21, 22) die Dosiereinrichtung, die Zusatzstoffleitung, das zweite Einwegeventil und das Identifikationsmittel (73) eine einzelne zusammenhängende verwerfbare Einheit bilden und dadurch ein hygienisches System gewährleisten, welches die Notwendigkeit vermeidet, regelmäßig die Zusatzbestandteilseite des Systems zu reinigen, da letztere einfach jedes Mal ersetzt wird, wenn die Patrone (17, 18, 68) ersetzt wird.

26. Getränkespender nach Anspruch 1, wobei das erste Einwegeventil (21, 22), die Dosiereinrichtung, die Zusatzstoffleitung und das zweite Einwegeventil als ein zusammenhängendes Element geliefert werden, und der Vorratsbehälter (19, 20) als zweiter Teil geliefert wird, wobei die beiden Teile mittels einer einzelnen Verbindung zur Benutzung aneinander anschließbar sind.

27. Getränkespender nach Anspruch 26, wobei der Vorratsbehälter (19, 20) eine Film- oder Foliendichtung aufweist, die einen Auslass bedeckt und dass das zusammenhängende Element, welches die Dosiereinrichtung enthält, ein Einlassrohr aufweist, welche von diesem zum Einführen in den Vorratsbehälter (19, 20) durch den Film oder die Folie vorsteht und diese durchlocht, während sie hindurchgeführt wird.

## Revendications

1. Distributeur de boissons pour distribuer des denrées alimentaires fluides et, en option, un volume sélectionné d'un ou de plusieurs ingrédients additionnels pour renforcer la saveur ou la valeur nutritive de la boisson de base, le distributeur comprenant:
a) un moyen pour fournir une quantité dosée de la boisson de base
b) une pluralité de réservoirs (19, 20) chacun contenant un ingrédient additionnel et chacun ayant un dispositif de dosage associé apte à distribuer, par une vanne de non-retour (21, 22, 36, 37), un volume sélectionné d'un ingrédient additionnel; et
c) un moyen pour permettre à l'utilisateur d'amener optionnellement le distributeur à distribuer un ou plusieurs desdits ingrédients additionnels sélectionnés dans la boisson de base,
**caractérisé en ce que:** le réservoir (19, 20) et le dispositif de dosage sont jetables et forment ensemble une cartouche jetable (17, 18, 68) qui est insérée dans et retirée du distributeur (61) comme un composant, où la cartouche jetable (17, 18, 68) comprend un réservoir (19, 20) d'ingrédient, un moyen pour mesurer et doser une quantité de l'ingrédient, une première vanne de non-retour (21, 22) placée entre le réservoir (19, 20) et le moyen de dosage permettant l'écoulement du réservoir (19, 20) au moyen de dosage mais non pas dans la direction opposée, et un conduit menant du moyen de dosage à une deuxième vanne de non-retour par lequel l'ingrédient peut être dosé dans la boisson de base dans le distributeur, et où il est associé au réservoir jetable (19, 20) un moyen d'identification (73) comprenant des informations se rapportant à au moins un de: le volume de l'ingrédient dans le réservoir, la durée de conservation de l'ingrédient, la durée de conservation active de l'ingrédient, des données identifiant l'ingrédient comme étant authentique, une non-compatibilité avec d'autres ingrédients et la grandeur de dose maximale permise; et où l'appareil contient un moyen pour lire automatiquement et utiliser ladite information comprise dans le moyen d'identification (73) pour la commande de la distribution des ingrédients additionnels précités.

2. Distributeur de boisson selon la revendication 1, dans lequel le moyen d'identification (73) contient au moins une information se rapportant à la durée de conservation des ingrédients additionnels, et l'appareil comprend un moyen pour lire automatiquement ladite information et pour distribuer seulement l'ingrédient s'il est dans sa durée de conservation.

3. Distributeur de boisson selon la revendication 1, dans lequel le moyen d'identification est un dispositif de transmission RF (73) dont les données sont lues par le distributeur lorsque le réservoir (19, 20) ou une cartouche (17, 18, 68) contenant le transmetteur RF (73) est placé à proximité étroite d'un circuit de lecteur RF (72).

4. Distributeur de boisson selon la revendication 3, dans lequel chaque position dans le distributeur pour accepter un réservoir (19, 20) ou une cartouche (17, 18, 68) possède un circuit de lecteur RF associé (72).

5. Distributeur de boisson selon la revendication 4, dans lequel les circuits de lecteur RF (72) sont des circuits de lecteur de courte plage.

6. Distributeur de boisson selon la revendication 5, dans lequel la plage des circuits de lecteur RF (72) est accordée de telle sorte que chaque circuit peut seulement lire des données du transmetteur RF (73) associées à un réservoir (19, 20) ou une cartouche (17, 18, 68) placé dans la position sur ou dans le distributeur (61) auquel le circuit de lecteur RF (72) est associé.

7. Distributeur de boisson selon les revendications 3 à 6, dans lequel le circuit de réception (72) transmet un signal qui active le transmetteur (73) et reçoit ensuite le signal transmis par le transmetteur activé (73).

8. Distributeur de boisson selon la revendication 7, dans lequel le circuit de réception (72) fonctionne à une fréquence d'au moins 13MHz.

9. Distributeur de boisson selon les revendications 1 à 8, dans lequel un système de commande électronique (15) compte le nombre de doses ou le volume de l'ingrédient restant.

10. Distributeur de boisson selon la revendication 9, dans lequel le distributeur peut afficher le nombre de doses ou le volume de l'ingrédient restant.

11. Distributeur de boisson selon la revendication 10, dans lequel le système de commande (15) stocke au moins temporairement des données se rapportant à chaque cartouche (17, 18, 68).

12. Distributeur de boisson selon la revendication 11, dans lequel le système de commande (15) stock des données se rapportant au nombre de doses, ou bien le volume de l'ingrédient, distribué d'une cartouche (17, 18, 68).

13. Distributeur de boisson selon la revendication 1, dans lequel les informations sont initialement écrites sur un moyen d'identification (13) associé en permanence à la cartouche (17, 18, 68), et le distributeur possède une capacité de lecture/écriture telle que le distributeur peut lire les informations sur la cartouche (17, 18, 68) et écrire ensuite les informations nouvelles sur la cartouche (17, 18, 62).

14. Distributeur de boisson selon la revendication 13, dans lequel l'organe de lecture écriture incorporé dans le distributeur écrit sur quelques-unes des données sur le moyen d'identification (73).

15. Distributeur de boisson selon la revendication 13 ou la revendication 14, dans lequel le moyen d'identification (73) est un indicateur RFID (43a) et le distributeur incorpore un organe de lecture/écriture RFID.

16. Distributeur de boisson selon la revendication 13 ou la revendication 14, dans lequel les informations peuvent être stockées sur une bande magnétique de lecture/écriture.

17. Distributeur de boisson selon la revendication 1, dans lequel le moyen de dosage est entraîné par un moyen d'entraînement non jetable incorporé dans le distributeur.

18. Distributeur de boisson selon la revendication 1, dans lequel le moyen de dosage est une pompe de seringue (23; 24), l'ingrédient étant dosé par le retrait d'un plongeur associé dans la seringue pour aspirer l'ingrédient du réservoir (19, 20) dans le corps de la seringue, le volume dosé d'ingrédient aspiré dépendant de la distance sur laquelle le plongeur de la pompe de seringue est rétracté, et par l'avancée du plongeur dans la seringue pour expulser le fluide depuis l'intérieur à travers un conduit (42) et une vanne (43) dans la boisson de base avec laquelle il se mélange.

19. Distributeur de boisson selon la revendication 18, dans lequel le plongeur est en interface amovible avec un moyen d'entraînement linéaire (40).

20. Distributeur de boisson selon la revendication 19, dans lequel l'élément d'entraînement linéaire (40) est un moteur pas à pas avec un mécanisme d'engrenage associé pour transformer le mouvement de rotation en mouvement linéaire.

21. Distributeur de boisson selon la revendication 10, dans lequel le moyen d'entraînement (40) entraîne contre une butée fixe dans une direction de telle sorte que le déplacement commence toujours à partir d'un point de référence connu.

22. Distributeur de boisson selon la revendication 21, dans lequel la butée fixe est dans la position du plongeur sorti (c'est-à-dire la pompe est amorcée) de sorte que le système est toujours prêt à fonctionner en supprimant ainsi la nécessité de disposer d'un délai de temps pour amorcer d'abord la pompe avant de distribuer l'ingrédient.

23. Distributeur de boisson selon la revendication 22, dans lequel l'extrémité de la vanne de non-retour fait saillie légèrement dans l'écoulement de la boisson de base de sorte que l'écoulement sur celle-ci rince la pointe et empêche ainsi une contamination croisée de l'ingrédient additionnel entre les boissons.

24. Distributeur de boisson selon la revendication 23, dans lequel la vanne de non retour-entre le moyen de pompage et la boisson de base est une vanne basculante (27, 28, 43, 60) avec une pression de rupture positive pour empêcher que le contenu de la cartouche (17, 18, 62) fuie sous gravité.

25. Distributeur de boisson selon la revendication 1, dans lequel le réservoir (19, 20) la première vanne de non-retour (21, 22), le moyen de dosage, le conduit d'ingrédient, la deuxième vanne de non-retour et le moyen d'identification (73) forment une seule unité jetable intégrée en assurant ainsi un système sanitaire qui distribue avec la nécessité de nettoyer régulièrement le côté ingrédient du système lorsque le dernier est simplement remplacé à chaque fois que le cartouche (17, 18, 68) est remplacée.

26. Distributeur de boisson selon la revendication 1, dans lequel la première vanne de non-retour (21, 22), le moyen dosage, le conduit d'ingrédient et la deuxième vanne de non-retour sont formés comme un élément unitaire, et le réservoir (19, 20) est formé comme une deuxième pièce, les deux parties pouvant être reliées au moyen d'une connexion à usage unique.

27. Distributeur de boisson selon la revendication 26, dans lequel le réservoir (19, 20) présente un recouvrement d'étanchéité de film ou de feuille couvrant une sortie, et l'élément unitaire contenant le moyen de dosage présente un tube d'entrée s'étendant de celui-ci pour l'insertion dans le réservoir (19, 20) à travers le film ou la feuille en le perçant lorsqu'il passe à travers celui-ci.
